# FASCICULE DE BREVET EUROPEEN

(11) **EP 1 260 461 B1**
(45) Date de publication et mention de la délivrance du brevet: **14.04.2004**
(21) Numéro de dépôt: 02291205.9
(22) Date de dépôt: 15.05.2002
(51) Int. Cl.: B65G 39/12, F16P 1/00

(54) **Support de bande de convoyeur et convoyeur le comportant**
Tragelement eines Bandförderers und Förderer mit einem solchen Element
Belt conveyor support element and conveyor comprising same

(30) Priorité: 17.05.2001 FR 0106536
(43) Date de publication de la demande: 27.11.2002
(73) Titulaire: Brunone, René, 27950 Saint-Marcel (FR)
(72) Inventeur: Brunone, René, 27950 Saint-Marcel (FR)
(74) Mandataire: Blot, Philippe Robert Emile

(56) Documents cités:
- FR-A- 2 655 628
- FR-A- 2 738 230
- FR-A- 2 782 989
- GB-A- 225 969

## Description

La présente invention concerne un support de bande pour un convoyeur du type comportant un bâti, au moins un rouleau pour l'appui de la bande, lequel rouleau est rotatif par rapport au bâti et comporte axialement, au moins à une extrémité, un tourillon de support, le bâti comportant au moins une patte de support du rouleau rotatif, la patte étant munie d'un moyen de réception du tourillon de support du rouleau, le support comportant en outre un écran de protection porté par le bâti et disposé en regard du rouleau, un tel support est décrit dans le document FR-A-2 655 628.

L'invention concerne en outre un convoyeur à bande comportant de tels supports.

Afin de transporter des granulats ou des cailloux sur un chantier de construction ou un site d'exploitation de minerais, il est connu d'utiliser des convoyeurs à bande. Ceux-ci comportent un ensemble de rouleaux de support sur lesquels repose une bande de transport. Cette bande est refermée en boucle et est animée d'un mouvement de déplacement sur elle-même.

Les rouleaux sont généralement tenus, à chacune de leurs extrémités, par des pattes de support, ces pattes étant elles-mêmes solidaires d'un bâti reposant sur le sol ou sur un châssis de support.

Par ailleurs, il est connu de disposer un écran de protection le long de chaque rouleau en regard de la face du rouleau tournée vers l'amont du convoyeur. Cet écran de protection est maintenu fixe par rapport au bâti et présente un bord affleurant la surface inférieure de la bande. Cet écran est adapté pour éviter le coincement de corps étrangers entre le rouleau et la bande, ainsi que l'écrasement accidentel d'un membre d'un ouvrier dans l'espace de pincement délimité entre le rouleau et la bande.

Dans les supports de bande connus, les écrans de protection sont solidarisés aux pattes, par exemple par vissage.

Ainsi, la liaison des rouleaux et des écrans de protection aux pattes de support est relativement complexe, ce qui augmente le coût des supports et leur temps d'assemblage.

L'invention a pour but de proposer un support pour bande de convoyeur dont la structure est simple, réduisant ainsi le temps et le coût d'assemblage.

A cet effet, l'invention a pour objet un support pour bande de convoyeur comme décrit par la revendication 1.

Suivant des modes particuliers de réalisation, le support comporte l'une ou plusieurs des caractéristiques suivantes :
- lesdits moyens de confinement comportent une surface de butée appliquée contre le tourillon et assurant le maintien de celui-ci en appui contre le fond de l'encoche ;
- la surface de butée est délimitée sur un organe déformable élastiquement ;
- ledit écran de protection comporte un évidement de réception de l'extrémité du tourillon de support ;
- l'écran de protection comporte des moyens d'enclenchement élastique adaptés pour solidariser l'écran de protection et la patte ; et
- la surface du rouleau et un bord de l'écran de protection définissent un plan de circulation de la bande, et ladite encoche s'ouvre suivant une direction sensiblement parallèle au plan de circulation de la bande.

L'invention a en outre pour objet un convoyeur à bande comportant au moins un support tel que défini ci-dessus.

L'invention sera mieux comprise à la lecture de la description qui va suivre, donnée uniquement à titre d'exemple et faite en se référant aux dessins, sur lesquels :
- la figure 1 est une vue en élévation d'un support pour bande de convoyeur selon l'invention ;
- la figure 2 est une vue en coupe transversale du support prise suivant la ligne II-II ;
- la figure 3 est une vue de dessus de l'agencement d'un rouleau et de l'écran de protection associé du support de la figure ; et
- la figure 4 est une vue en élévation d'un détail des moyens de confinement d'une extrémité du rouleau prévus sur l'écran de protection.

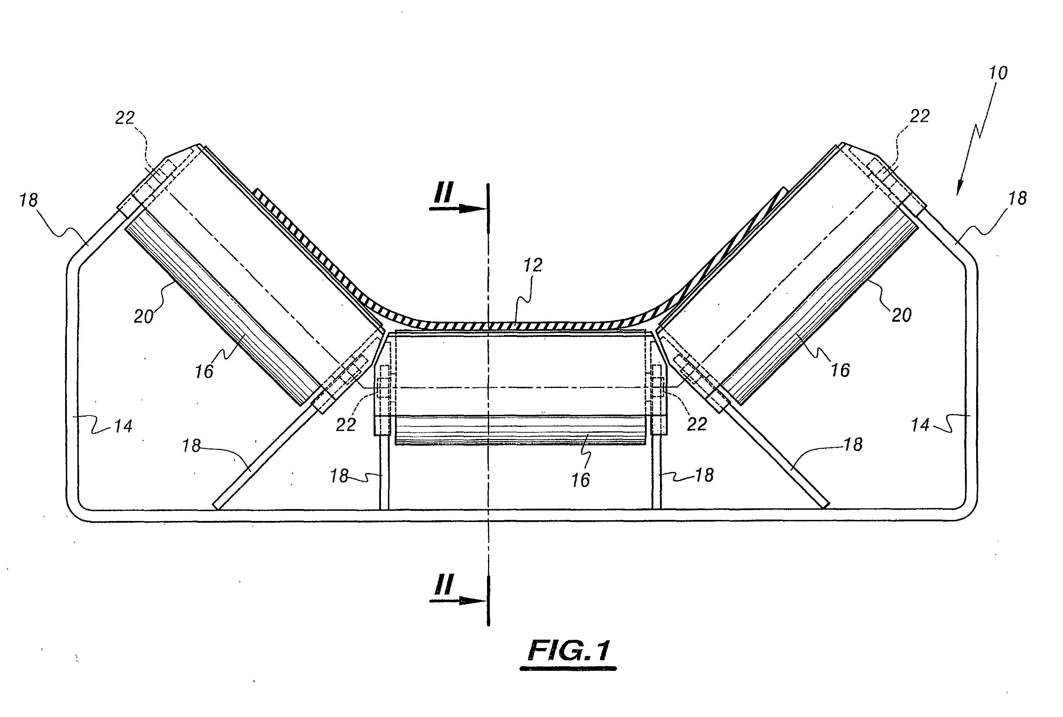

Sur la figure 1, est représenté un support 10 d'un convoyeur à bande.

Comme connu en soi, le convoyeur comporte une bande 12 circulant en appui sur un ensemble de supports de bande disposés suivant la longueur du convoyeur.

Chaque support 10 comporte un bâti 14 adapté pour être solidarisé à un châssis non représenté. Chaque support comporte en outre, dans le mode de réalisation représenté, trois rouleaux 16 montés rotatifs dans un même plan par rapport au bâti 14.

Les rouleaux 16 sont portés par des pattes de support 18 du bâti. Les pattes 18 s'étendent à chaque extrémité des rouleaux.

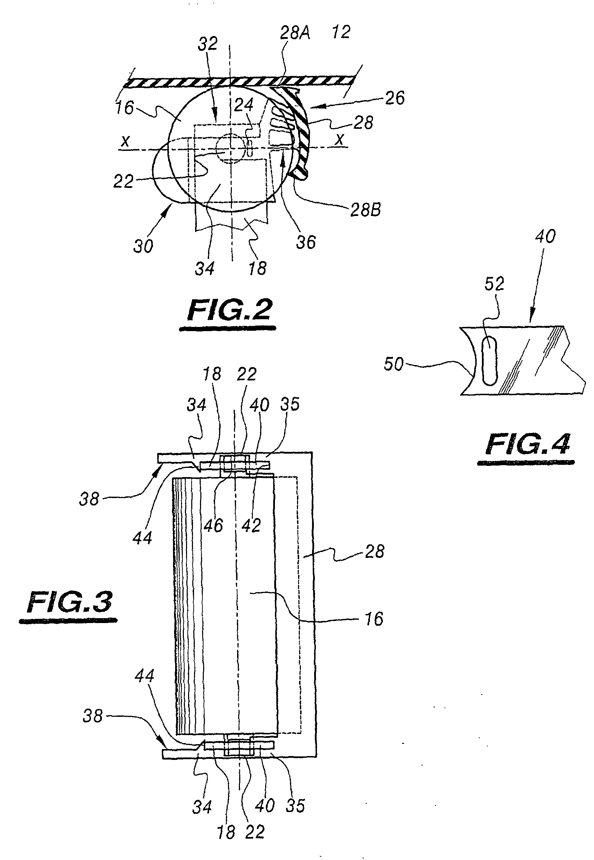

Les rouleaux 16 présentent une surface latérale cylindrique 20 dont l'axe forme l'axe de rotation du rouleau. Le rouleau présente axialement , à chaque extrémité, des tourillons de support 22 faisant saillie par rapport à la surface cylindrique 20 des rouleaux. La surface latérale cylindrique du rouleau est rotative par rapport aux tourillons. Ceux-ci peuvent être formés par les extrémités d'un arbre unique traversant le rouleau de part en part. Ces tourillons sont adaptés pour être engagés et immobilisés, comme illustré sur la figure 2, dans des encoches 24 ménagées dans chacune des pattes 18. Pour leur immobilisation en rotation en rapport aux pattes 18, les tourillons présentent des méplats dont l'écartement est égal à la largeur de l'encoche.

Les encoches 24 s'ouvrent suivant la paroi latérale avant des pattes 18 suivant une direction X-X s'étendant généralement parallèlement au plan d'avancement de la bande 12 portée en appui sur la surface du rouleau 16 associé. La paroi latérale avant est celle trouvée vers l'avant du convoyeur en considérant le sens d'avancement du brun porteur de la bande.

En outre, le support 10 comporte, pour chaque rouleau 16, un écran de protection 26. Cet écran 26 comporte une paroi pleine 28 s'étendant suivant la longueur du rouleau 16 associé. A chacune des extrémités de la paroi 28 sont prévus des moyens 30 de retenue de la paroi 28 sur les pattes 18.

Selon l'invention, l'écran 28 comporte en outre des moyens 32 de confinement des tétons 22 dans les encoches associées.

L'écran 28 est formé par exemple en matière plastique.

Plus précisément, et comme illustré sur la figure 3, la paroi 28 est venue de matière, à chacune de ses extrémités, avec des ailes 34 de fixation sur les pattes 12. La paroi 28 est reliée à une extrémité de chacune des ailes par un ensemble de lamelles élastiques 36.

Les pattes 34 s'étendent perpendiculairement à la paroi 28, c'est-à-dire perpendiculairement à l'axe du rouleau 16 associé.

La longueur des ailes 34 est supérieure à la largeur des pattes 18, de sorte qu'à l'opposé de l'extrémité de liaison à la paroi 28, chaque patte 34 présente un prolongement 38 formant une poignée pour l'appui des doigts afin de démonter l'écran de protection 26.

Les moyens 32 de confinement du tourillon associé comportent une lame 40 s'étendant parallèlement à l'aile 34 du côté de l'aile faisant face au rouleau. La lame 40 est liée à une première extrémité, à la paroi 28 et présente une seconde libre adaptée pour s'appliquer contre la surface d'un tourillon du rouleau. L'aile 34 et la lame 40 délimitent une rainure 42 de réception du bord avant de la patte 18 en considérant le sens d'avancement du convoyeur.

Une saillie 44 est disposée sur l'essentiel de la hauteur de l'aile 34 en regard de la rainure 42, la saillie étant ménagée à une distance du fond de la rainure égale à la largeur de la patte 18.

La saillie 44 est adaptée pour assurer une retenue mécanique de l'aile sur la patte associée, par enclenchement élastique de la saillie 44 le long du bord arrière de la patte 18 en considérant le sens d'avancement de la bande.

Enfin, l'aile 34 présente, dans sa face tournée vers le rouleau, un évidement circulaire 46 de réception de l'extrémité du tourillon 22 du rouleau.

La patte 40, telle qu'illustrée sur la figure 4, présente, à son extrémité libre, un profil concave 50 de forme complémentaire au tourillon 22. Cette surface 50 constitue une surface d'appui radiale sur le tourillon 22 afin de presser celui-ci contre le fond de l'encoche 24.

Au voisinage de son extrémité, la lame 40 présente une lumière 52 adaptée pour permettre une déformation élastique de son extrémité libre et ainsi solliciter élastiquement le tourillon 22.

La paroi 28 de l'écran présente un bord longitudinal supérieur 28A et un bord inférieur 28B.

Les moyens 30 de retenue de la paroi 28 sont adaptés pour maintenir celle-ci, de sorte que le bord supérieur 28A s'étende immédiatement au-dessous de la bande 12. Le bord supérieur 28A et l'arête de contact entre la bande et le rouleau 16 s'étendent alors sensiblement suivant le plan de déplacement de la bande.

De même, les moyens de retenue sont adaptés pour maintenir le bord 28B légèrement en appui sur la surface latérale 20 du rouleau afin d'assurer un raclage de celui-ci.

Le support pour bande selon l'invention est d'une structure relativement simple puisque l'écran de protection assure à la fois la protection du rouleau et le maintien du rouleau sur les pattes de support 12.

En effet, la lame élastique 40 assure un verrouillage et un maintien sous pression des tourillons 22 contre le fond des encoches 24.

La pression exercée sur les tourillons est obtenue par légère déformation élastique des extrémités des lames 40.

Pour la mise en place de l'écran, celui-ci est engagé depuis le côté du rouleau, alors que les ailes 34 sont écartées élastiquement l'une de l'autre.

Après mise en place de la paroi 28 et des lames 40 en contact des tourillons, les logements 46 étant en regard de l'extrémité des tourillons, les ailes 34 sont relâchées de sorte que les saillies 44 viennent s'enclencher élastiquement en arrière des pattes 12 assurant ainsi une retenue en position de l'écran 26.

En cas de dysfonctionnement d'un rouleau nécessitant son démontage, l'écran 26 est facilement retiré en dégageant les ailes 34 par action sur les poignées 38. Après retrait de l'écran 26, le rouleau endommagé peut être facilement dégagé par déplacement des tourillons suivant la longueur des encoches 24. L'axe des encoches s'étendant parallèlement au plan de déplacement de la bande, le rouleau peut être retiré sans que la bande n'ait à être soulevée. De même, le rouleau réparé, ou un nouveau rouleau peut être réintroduit facilement sans qu'il soit nécessaire de soulever la bande.

Ainsi, le démontage et le remontage d'un rouleau s'effectuent très facilement.

## Revendications

1. Support (10) pour bande (12) de convoyeur comportant un bâti (14), au moins un rouleau (16) pour l'appui de la bande (12), lequel rouleau (16) est rotatif par rapport au bâti (14) et comporte axialement, au moins à une extrémité, un tourillon (22) de support, le bâti (14) comportant au moins une patte (18) de support du rouleau rotatif (16), la patte (18) étant munie d'un moyen (24) de réception du tourillon (22) de support du rouleau (16), le support (10) comportant en outre un écran de protection (26) porté par le bâti (14) et disposé en regard du rouleau (16), **caractérisé en ce que** ledit moyen de réception est constitué d'une encoche (24) et **en ce que** ledit écran (26) de protection comporte des moyens (32) de confinement du tourillon (22) dans l'encoche (24).

2. Support selon la revendication 1, **caractérisé en ce que** lesdits moyens de confinement comportent une surface de butée (50) appliquée contre le tourillon (22) et assurant le maintien de celui-ci en appui contre le fond de l'encoche (24).

3. Support selon la revendication 2, **caractérisé en ce que** la surface de butée (50) est délimitée sur un organe (40) déformable élastiquement.

4. Support selon l'une quelconque des revendications précédentes, **caractérisé en ce que** ledit écran de protection (26) comporte un évidement (46) de réception de l'extrémité du tourillon de support (22).

5. Support selon l'une quelconque des revendications précédentes, **caractérisé en ce que** l'écran de protection (26) comporte des moyens (44) d'enclenchement élastique adaptés pour solidariser l'écran de protection (26) et la patte (18).

6. Support selon l'une quelconque des revendications précédentes, **caractérisé en ce que** la surface (20) du rouleau (16) et un bord de l'écran de protection (26) définissent un plan de circulation de la bande (12), et **en ce que** ladite encoche (24) s'ouvre suivant une direction sensiblement parallèle au plan de circulation de la bande (12).

7. Convoyeur à bande comportant une bande (12) supportée par un ensemble de supports, **caractérisé en ce qu'**il comporte au moins un support (10) selon l'une quelconque des revendications précédentes.

## Patentansprüche

1. Tragelement (10) für ein Förderband (12), umfassend einen Rahmen(14), mindestens eine Rolle (16) zum Aufliegen des Bandes (12), wobei diese Rolle (16) bezüglich des Rahmens (14) drehbar ist und axial mindestens an einem Ende einen Lagerdrehzapfen (22) aufweist, wobei der Rahmen (14) mindestens einen Fuß (18) zum Tragen der drehbaren Rolle (16) aufweist, wobei der Fuß (18) mit einem Mittel (24) zur Aufnahme des Drehzapfens (22) zur Lagerung der Rolle (16) versehen ist, wobei das Tragelement (10) außerdem einen Schutzschirm (26) aufweist, der von dem Rahmen (14) getragen ist und gegenüber der Rolle (16) angeordnet ist, **dadurch gekennzeichnet, daß** das Aufnahmemittel aus einem Einschnitt (24) besteht und daß der Schutzschirm (26) Mittel (32) zur Einschließung des Drehzapfens (22) in dem Einschnitt (24) aufweist.

2. Tragelement nach Anspruch 1, **dadurch gekennzeichnet, daß** die Einschließungsmittel eine Anschlagsfläche (50) aufweisen, die an den Drehzapfen (22) angelegt ist und dessen Halt in Anlage an dem Boden des Einschnitts (24) gewährleistet.

3. Tragelement nach Anspruch 2, **dadurch gekennzeichnet, daß** die Anschlagsfläche (50) auf einem elastisch verformbaren Organ (40) gebildet ist.

4. Tragelement nach einem der vorhergehenden Ansprüche, **dadurch gekennzeichnet, daß** der Schutzschirm (26) eine Aussparung (46) zur Aufnahme des Endes des Lagerdrehzapfens (22) aufweist.

5. Tragelement nach einem der vorhergehenden Ansprüche, **dadurch gekennzeichnet**, der Schutzschirm (26) Mittel (44) zum elastischen Einrasten aufweist, die dafür ausgelegt sind, den Schutzschirm (26) und den Fuß (18) miteinander fest zu verbinden.

6. Tragelement nach einem der vorhergehenden Ansprüche, **dadurch gekennzeichnet, daß** die Oberfläche (20) der Rolle (16) und ein Rand des Schutzschirms (26) eine Laufebene des Bandes (12) definieren und daß der Einschnitt (24) sich in einer zur Laufebene des Bandes (12) im wesentlichen parallelen Richtung öffnet.

7. Förderband mit einem von einer Anzahl von Tragelementen getragenen Band (12), **dadurch gekennzeichnet, daß** es mindestens ein Tragelement (10) nach einem der vorhergehenden Ansprüche ausweist.

## Claims

1. Support (10) for a conveyor belt (12), comprising a frame (14), at least one roller (16) for supporting the belt (12), which roller (16) rotates in relation to the frame (14) and comprises axially, at least at one end, a supporting trunnion (22), the frame (14) comprising at least one foot (18) for supporting the rotating roller (16), the foot (18) being equipped with a means (24) for receiving the trunnion (22) for supporting the roller (16), the support (10) further comprising a protective screen (26) which is carried by the frame (14) and is disposed facing the roller (16), **characterised in that** the said receiving means is made up of a slot (24) and **in that** the said protective screen (26) comprises means (32) for confining the trunnion (22) in the slot (24).

2. Support according to claim 1, **characterised in that** the said confining means comprise a stop surface (50) which is applied against the trunnion (22) and ensures that the latter is kept resting against the bottom of the slot (24).

3. Support according to claim 2, **characterised in that** the stop surface (50) is delimited on an elastically deformable component (40).

4. Support according to any of the preceding claims, **characterised in that** the said protective screen (26) comprises a recess (46) for receiving the end of the supporting trunnion (22).

5. Support according to any of the preceding claims, **characterised in that** the protective screen (26) comprises means (44) of elastic engagement which are adapted to interlock the protective screen (26) and the foot (18).

6. Support according to any of the preceding claims, **characterised in that** the surface (20) of the roller (16) and one edge of the protective screen (26) define a plane of circulation of the belt (12), and **in that** the said slot (24) opens in a direction which is substantially parallel to the plane of circulation of the belt (12).

7. Belt conveyer comprising a belt (12) supported by a group of supports, **characterised in that** the said conveyer comprises at least one support (10) according to any of the preceding claims.
